(19) Europäisches Patentamt
European Patent Office
Office européen des brevets

(11) **EP 4 564 247 A1**

(12) **EUROPEAN PATENT APPLICATION**

(43) Date of publication:
**04.06.2025 Bulletin 2025/23**

(21) Application number: **23383242.7**

(22) Date of filing: **01.12.2023**

(51) International Patent Classification (IPC):
**G06Q 10/04** (2023.01)  **G01G 19/07** (2006.01)

(52) Cooperative Patent Classification (CPC):
**G06Q 10/04; G01G 19/07**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **The Boeing Company**
**Arlington, VA 22202 (US)**

(72) Inventors:
• **LÓPEZ LEONÉS, Javier**
**28042 Madrid (ES)**
• **AYZIT, Recep**
**34467 Sariyer (TR)**

• **CENGIZ, Melih Safa**
**34467 Sariyer (TR)**
• **BASPINAR, Baris**
**34467 Sariyer (TR)**
• **UZUN, Mevlut**
**34467 Sariyer (TR)**
• **INALHAN, Gokhan**
**34467 Sariyer (TR)**
• **DEMIREZEN, Mustafa Umut**
**34467 Sariyer (TR)**

(74) Representative: **ZBM Patents - Zea, Barlocci &
Markvardsen**
**Rambla de Catalunya, 123**
**08008 Barcelona (ES)**

(54) **SYSTEMS AND METHODS FOR AIRCRAFT TAKEOFF WEIGHT ESTIMATION**

(57)    Systems and methods for aircraft takeoff weight estimation include receiving input data corresponding to trajectory data of a flight of an aircraft; generating a set of input parameters based on the trajectory data, where the set of input parameters include a first subset of parameters corresponding to a takeoff phase of the flight and a second subset of parameters corresponding to a climb phase of the flight; and processing the set of input parameters using a trained model to generate an estimate of a takeoff weight of the aircraft.

EP 4 564 247 A1

**Description**

## FIELD OF THE DISCLOSURE

The subject disclosure is generally related to systems and methods for aircraft takeoff weight estimation.

## BACKGROUND

With ever increasing air traffic, efficient aircraft management accordingly becomes increasingly important. One aspect of aircraft management includes an accurate estimation of takeoff weight for a particular aircraft, as the takeoff weight can be an important parameter for determining flight performance. For example, takeoff weight can impact takeoff speed and distance, takeoff and climb thrust requirements, drag force and fuel consumption. Because directly measuring takeoff weight is impractical, having an accurate estimate of takeoff weight allows for more fuel-efficient operation of aircraft, which in turn enables more efficient aircraft management.

## SUMMARY

In a particular implementation, a method includes receiving input data corresponding to trajectory data of a flight of an aircraft. The method also includes generating a set of input parameters based on the trajectory data, wherein the set of input parameters include a first subset of parameters corresponding to a takeoff phase of the flight and a second subset of parameters corresponding to a climb phase of the flight. The method also includes processing the set of input parameters using a trained model to generate an estimate of a takeoff weight of the aircraft.

In another particular implementation, a device includes one or more processors configured to receive input data corresponding to trajectory data of a flight of an aircraft. The one or more processors are further configured to generate a set of input parameters based on the trajectory data, wherein the set of input parameters include a first subset of parameters corresponding to a takeoff phase of the flight and a second subset of parameters corresponding to a climb phase of the flight. The one or more processors are further configured to process the set of input parameters using a trained model to generate an estimate of a takeoff weight of the aircraft.

In another particular implementation, a non-transitory computer-readable medium includes instructions that, when executed by one or more processors, cause the one or more processors to receive input data corresponding to trajectory data of a flight of an aircraft. The instruction further cause the one or more processors to generate a set of input parameters based on the trajectory data, wherein the set of input parameters include a first subset of parameters corresponding to a takeoff phase of the flight and a second subset of parameters corresponding to a climb phase of the flight. The instruction further cause the one or more processors to process the set of input parameters using a trained model to generate an estimate of a takeoff weight of the aircraft.

In another particular implementation, a device includes means for receiving input data corresponding to trajectory data of a flight of an aircraft. The device also includes means for generating a set of input parameters based on the trajectory data, wherein the set of input parameters include a first subset of parameters corresponding to a takeoff phase of the flight and a second subset of parameters corresponding to a climb phase of the flight. The device also includes means for processing the set of input parameters using a trained model to generate an estimate of a takeoff weight of the aircraft.

The features, functions, and advantages described herein can be achieved independently in various implementations or can be combined in yet other implementations, further details of which can be found with reference to the following description and drawings.

## BRIEF DESCRIPTION OF THE DRAWINGS

FIG. 1 depicts an example system for aircraft takeoff weight estimation, in accordance with some examples of the subject disclosure.

FIG. 2 illustrates an example architecture for aircraft takeoff weight estimation, in accordance with some examples of the subject disclosure.

FIG. 3 illustrates a box plot of the z-scores of a plurality of features, in accordance with some examples of the subject disclosure.

FIG. 4 illustrates an example visualization of the impact of the set of the selected features, in accordance with some examples of the subject disclosure.

FIG. 5 illustrates an example plot of estimated takeoff weight ("TOW') values for a Boeing 777 vs. actual takeoff weight values, in accordance with some examples of the subject disclosure.

FIG. 6 illustrates an example bar graph illustrating the number of aircraft for each of the absolute error values for the performance of the trained model of FIGS. 1-5, in accordance with some examples of the subset disclosure.

FIG. 7 illustrates an example plot of estimated takeoff weight values for three types of aircraft-the Boeing 737, the Boeing 777, and the Boeing 787-vs. actual takeoff weight values, in accordance with some examples of the subject disclosure.

FIG. 8 illustrates an example bar graph illustrating the number of aircraft for each of the absolute error values for the performance of the trained model of FIGS. 1-4 and 7, in accordance with some examples of the subset disclosure.

FIG. 9 is a flow chart of an example method for aircraft takeoff weight estimation, in accordance with some examples of the subject disclosure.

FIG. 10 is a block diagram of a computing environment including a computing device configured to support aspects of computer-implemented methods and computer-executable program instructions (or code), in accordance with some examples of the subject disclosure.

## DETAILED DESCRIPTION

Having an accurate estimate of takeoff weight can enable greater efficiencies in aircraft management. For example, for a given cruise altitude, speed, and temperature, a heavier aircraft burns more fuel, requiring more power. A lighter aircraft can climb with reduced thrust, consuming less fuel. Although the empty operating weight of a given aircraft is publicly available, payload weight and fuel quantity vary with a particular aircraft's operation.

Accurately estimating takeoff weight impacts a variety of areas of aircraft management. For example, takeoff weight directly affects the aircraft's performance during takeoff, climb, cruise, and landing. An aircraft management system can use this data to calculate performance parameters such as takeoff distance, climb rate, cruising speed, and range. By considering the takeoff weight of each aircraft in the fleet, the system can optimize flight routes, altitudes, and speeds to ensure efficient operations and reduce fuel consumption. As another example, takeoff weight impacts aircraft safety. Exceeding maximum takeoff weight can compromise an aircraft's performance ability to climb and maneuver safely. The aircraft management system can monitor takeoff weights to prevent overloading, ensuring that each flight remains within safe operating limits. As a further example, takeoff weight impacts maintenance planning as heavier aircraft experience increased stress on their components, which can lead to more rapid wear and tear. Tracking takeoff weights can allow an aircraft management system to assist in planning maintenance schedules, reducing unscheduled downtime, and extending the lifespan of aircraft.

Accurately estimating takeoff weight can enable a more efficient aircraft management system, as the actual takeoff weight can be impractical to directly measure and/or only available to a particular aircraft or airline. Further, certain estimates of takeoff weight rely on data that is only available to a particular aircraft or airline.

The systems and methods disclosed herein leverage publicly available information to provide an accurate estimate of takeoff weight for a particular aircraft, including by generating a subset of input parameters corresponding to at least a takeoff phase of a flight and a climb phase of a flight, and processing the subsets of input parameters using a trained model to generate an estimate of the takeoff weight of the aircraft.

A technical advantage of the subject disclosure is the ability to improve an aircraft management system by allowing the system to accurately estimate the takeoff weight of an aircraft based on publicly available information corresponding to a plurality of flight phases. The takeoff weight estimate can be used by the aircraft management system to, for example, more accurately plan an aircraft's route, altitude, and speed to reduce fuel consumption; ensure operational safety margins; monitor maintenance schedules, or some combination thereof.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

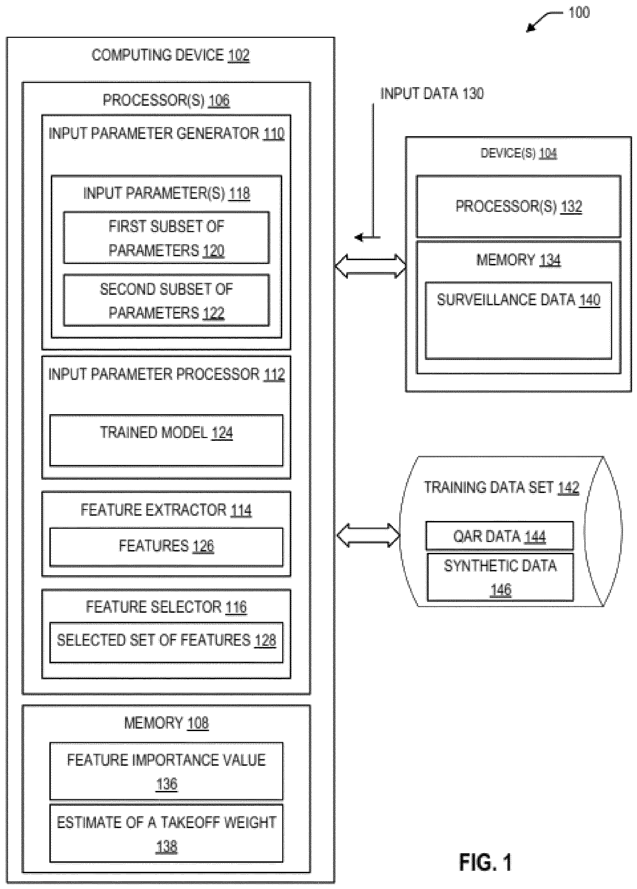

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular or optional plural (as indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

As used herein, the term "machine learning" should be understood to have any of its usual and customary meanings within the fields of computers science and data science, such meanings including, for example, processes or techniques by which one or more computers can learn to perform some operation or function without being explicitly programmed to do so. As a typical example, machine learning can be used to enable one or more computers to analyze data to identify patterns in data and generate a result based on the analysis. For certain types of machine learning, the results that are generated include data that indicates an underlying structure or pattern of the data itself. Such techniques, for example, include so called "clustering" techniques, which identify clusters (e.g., groupings of data elements of the data).

For certain types of machine learning, the results that are generated include a data model (also referred to as a "machine-learning model" or simply a "model"). Typically, a model is generated using a first data set to facilitate analysis of a second data set. For example, a first portion of a large body of data may be used to generate a model that can be used to analyze the remaining portion of the large body of data. As another example, a set of historical data can be used to generate a model that can be used to analyze future data.

Since a model can be used to evaluate a set of data that is distinct from the data used to generate the model, the model can be viewed as a type of software (e.g., instructions, parameters, or both) that is automatically generated by the computer(s) during the machine learning process. As such, the model can be portable (e.g., can be generated at a first computer, and subsequently moved to a second computer for further training, for use, or both). Additionally, a model can be used in combination with one or more other models to perform a desired analysis. To illustrate, first data can be provided as input to a first model to generate first model output data, which can be provided (alone, with the first data, or with other data) as input to a second model to generate second model output data indicating a result of a desired analysis. Depending on the analysis and data involved, different combinations of models may be used to generate such results. In some examples, multiple models may provide model output that is input to a single model. In some examples, a single model provides model output to multiple models as input.

Examples of machine-learning models include, without limitation, perceptrons, neural networks, support vector machines, regression models, decision trees, Bayesian models, Boltzmann machines, adaptive neuro-fuzzy inference systems, as well as combinations, ensembles and variants of these and other types of models. Variants of neural networks include, for example and without limitation, prototypical networks, autoencoders, transformers, self-attention networks, convolutional neural networks, deep neural networks, deep belief networks, etc. Variants of decision trees include, for example and without limitation, random forests, boosted decision trees, etc.

Since machine-learning models are generated by computer(s) based on input data, machine-learning models can be discussed in terms of at least two distinct time windows - a creation/training phase and a runtime phase. During the creation/training phase, a model is created, trained, adapted, validated, or otherwise configured by the computer based on the input data (which in the creation/training phase, is generally referred to as "training data"). Note that the trained model corresponds to software that has been generated and/or refined during the creation/training phase to perform particular operations, such as classification, prediction, encoding, or other data analysis or data synthesis operations. During the runtime phase (or "inference" phase), the model is used to analyze input data to generate model output. The content of the model output depends on the type of model. For example, a model can be trained to perform classification tasks or regression tasks, as non-limiting examples. In some implementations, a model may be continuously, periodically, or occasionally updated, in which case training time and runtime may be interleaved or one version of the model can be used for inference while a copy is updated, after which the updated copy may be deployed for inference.

In some implementations, a previously generated model is trained (or re-trained) using a machine-learning technique. In this context, "training" refers to adapting the model or parameters of the model to a particular data set. Unless otherwise clear from the specific context, the term "training" as used herein includes "re-training" or refining a model for a specific data set. For example, training may include so called "transfer learning." In transfer learning a base model may be trained using a generic or typical data set, and the base model may be subsequently refined (e.g., re-trained or further trained) using a more specific data set.

A data set used during training is referred to as a "training data set" or simply "training data". The data set may be labeled or unlabeled. "Labeled data" refers to data that has been assigned a categorical label indicating a group or category with which the data is associated, and "unlabeled data" refers to data that is not labeled. Typically, "supervised machine-learning processes" use labeled data to train a machine-learning model, and "unsupervised machine-learning processes" use unlabeled data to train a machine-learning model; however, it should be understood that a label associated with data is itself merely another data element that can be used in any appropriate machine-learning process. To illustrate, many clustering operations can operate using unlabeled data; however, such a clustering operation can use labeled data by ignoring labels assigned to data or by treating the labels the same as other data elements.

Training a model based on a training data set generally involves changing parameters of the model with a goal of causing the output of the model to have particular characteristics based on data input to the model. To distinguish from model generation operations, model training may be referred to herein as optimization or optimization training. In this context, "optimization" refers to improving a metric, and does not mean finding an ideal (e.g., global maximum or global minimum) value of the metric. Examples of optimization trainers include, without limitation, backpropagation trainers, derivative free optimizers (DFOs), and extreme learning machines (ELMs). As one example of training a model, during supervised training of a neural network, an input data sample is associated with a label. When the input data sample is provided to the model, the model generates output data, which is compared to the label associated with the input data sample to generate an error value. Parameters of the model are modified in an attempt to reduce (e.g., optimize) the error value. As another example of training a model, during unsupervised training of an autoencoder, a data sample is provided as input to the autoencoder, and the autoencoder reduces the dimensionality of the data sample (which is a lossy operation) and attempts to reconstruct the data sample as output data. In this example, the output data is compared to the input data sample to generate a reconstruction loss, and parameters of the autoencoder are modified in an attempt to reduce (e.g., optimize) the reconstruction loss.

FIG. 1 depicts an example system 100 for aircraft takeoff weight estimation, in accordance with some examples of the subject disclosure. In some implementations, the system 100 includes a computing device 102 configured to communicate with one or more devices 104. The computing device 102 can be configured to generate an estimate of a takeoff weight 138 based on input data 130 received from the device(s) 104.

In some implementations, the device(s) 104 can include, correspond to, or be included within an electronic device that includes one or more processors 132 coupled to a memory 134 storing surveillance data 140. In some aspects, the surveillance data 140 can include publicly available surveillance data associated with a flight of an aircraft. For example, the surveillance data 140 can include automatic dependent surveillance-broadcast ("ADS-B") data of the aircraft. As another example, the surveillance data 140 can include quick access recorder ("QAR") data of the aircraft.

The device(s) 104 can be configured to communicate input data 130 to the computing device 102. In some implementations, the input data 130 corresponds to or is otherwise associated with the surveillance data 140. For example, the input data 130 could include a subset of the surveillance data 140 relevant to a particular aircraft, set of aircraft, airline, etc. The input data 130 can also include data from one or more mathematical models of the aircraft. For example, the input data 130 can include data from a base of aircraft data ("BADA") model of the aircraft.

The computing device 102 can be configured to receive the input data 130 corresponding to trajectory data of a flight of an aircraft. In some implementations, the computing device 102 can include one or more processors 106 coupled to a memory 108. The processor(s) 106 can include an input parameter generator 110 configured to generate a set of input parameters 118 based on the trajectory data. In some aspects, the set of input parameters 118 can include one or more parameters associated with one or more aspects of the trajectory data. For example, the set of input parameters 118 can include data such as approach speed, flight range, cruise time, climb flight path angle, etc.

In some implementations, the set of input parameters 118 can include a plurality of subsets, with each subset of parameters associated with a particular flight phase. As an illustrative example, a flight can be divided into five phases: ground roll, takeoff, climb, cruise, and landing. In some aspects, the set of input parameters 118 can include a first subset of parameters 120 corresponding to the takeoff phase of the flight and a second subset of parameters 122 corresponding to the climb phase of the flight. In some aspects, the set of input parameters 118 can include a third subset of parameters corresponding to the ground roll phase of the flight, the cruise phase of the flight, or the landing phase of the flight. In the same or alternative aspects, the set of input parameters 118 can include a subset of parameters corresponding to each of the ground roll phase of the flight, the cruise phase of the flight, and the landing phase of the flight. Although a flight is described in terms of five phases above, more, fewer, and/or different phases can be used without departing from the scope of the subject disclosure. For example, the landing phase can be sub-divided into further phases. As another example, the takeoff and climb phases can be combined into a single phase.

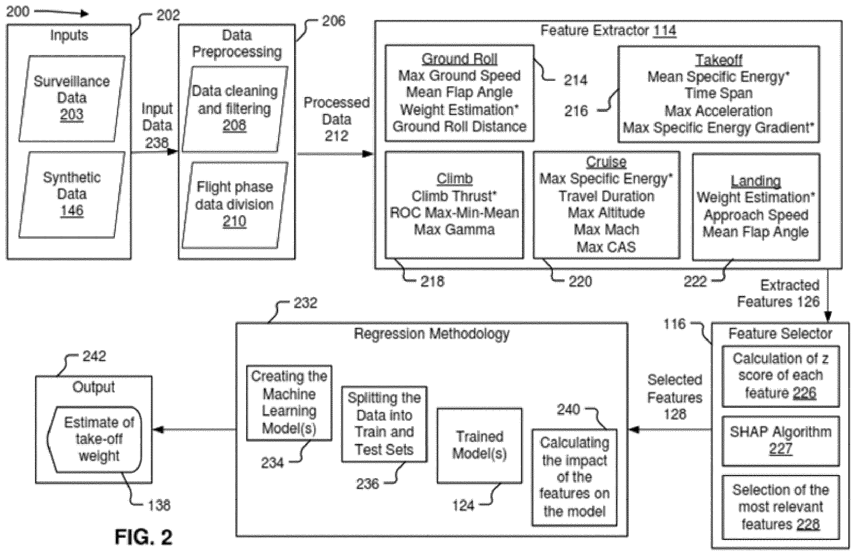

In some implementations, the processor(s) 106 can include an input parameter processor 112 configured to process the set of input parameters 118 using a trained model 124 to generate an estimate of a takeoff weight 138 of the aircraft. As described in more detail below and with reference to FIGS. 2-10, the trained model 124 can be trained on a data set including data representative of a plurality of phases of a large volume of aircraft flights. The training data set 142 for the trained model 124 can include data from actual flights, synthetic data from mathematical models of flights, or some combination thereof. In some aspects, the computing device 102 can be configured to train the trained model 124 with a training data set 142 including a set of QAR data 144, synthetic data 146, or a combination thereof. In a particular aspect, at least a portion of the synthetic data 146 is generated from a BADA model of the aircraft.

In some aspects, training the trained model 124 can include training a plurality of trial models and selecting, by the processor(s) 106, one of the plurality of trained trial models based on a performance criterion. For example, the processor(s) 106 can train a plurality of trial models according to a plurality of regression model types (e.g., extra trees regression, linear regression, gradient boosting regressor, gaussian process regressor, etc.), and selecting one of the plurality of trained trial models based on a mean absolute percentage error of the estimate of the takeoff weight 138 against an actual, known takeoff weight value. In a particular aspect, the processor(s) 106 can be configured to partition the training data into a training data subset and a test data subset. In such an aspect, the performance criterion can be based on the test data subset. For example, the performance criterion can be based on which of the plurality of trained models produces the most accurate estimate of the takeoff weight 138 based on the test data subset. In a further particular aspect, the training data subset can include synthetic data and the test data subset can include real data. Such a configuration can, for example, select one of the plurality of trained models (that were trained on synthetic data) based on which of the plurality of trained models produces the best estimate of the takeoff weight 138 when using real data.

In some implementations, the processor(s) 106 can also include a feature extractor 114 and a feature selector 116. The feature extractor 114 can be configured to extract a plurality of features 126 from the input data 130. The processor(s) 106 can also be configured to determine a feature importance value 136 for each of the plurality of features 126. In some aspects, the feature importance value 136 can be stored at the memory 108. The feature selector 116 can be configured to select a set of the plurality of features 128 based at least on the feature importance value(s) 136. In a particular aspect, the set of input parameters 118 corresponds to the selected set of features 128.

For example, the feature extractor 114 can be configured to extract a plurality of features 126 from the input data 130. This can include identifying one or more data points, data types, etc. from the input data 130 that are particularly relevant to a particular phase of a flight, a particular aircraft type, etc. Extracting the plurality of features 126 can also include mathematical, statistical, or other operations, calculations, derivations, etc. performed on one or more data points, data types, etc. of the input data 130 to generate one or more features 126, as described in more detail below with reference to FIG. 2. For example, the feature extractor 114 can be configured to calculate a specific energy gradient ($\frac{dE_{specific}}{dt}$) according to the formula: $\frac{dE_{specific}}{dt} = 0.5\left(V\frac{dV}{dt}\right) + g_0\left(\frac{dh}{dt}\right)$, where $V$ is the airspeed of the aircraft, $g_0$ is the gravitational constant of the Earth's surface, and h is the altitude. The feature selector 116 can be configured to select a maximum value of the specific energy gradient for use as an input parameter associated with the takeoff phase of the flight.

As noted above, the feature selector 116 can be configured to select the set of features 128 based at least on the feature importance value(s) 136. The feature importance value 136 for a particular feature can be one or more data values indicating the importance of that particular feature to a particular flight phase, a particular aircraft type, a particular aircraft tail number, a particular set of conditions, or some other appropriate variable. For example, a particular set of features 128 can be more important in determining an accurate estimate of the takeoff weight 138 of one type of aircraft (e.g., a Boeing® 737), but less important in determining an accurate estimate of the takeoff weight 138 of another type of aircraft (e.g., a Boeing® 777). Boeing is a registered trademark of The Boeing Company, a Delaware Corporation.

As another example, the specific energy gradient described above can be relatively more important in determining the estimate of the takeoff weight 138 when applied to data associated with the takeoff flight phase than when applied to data associated with the climb takeoff flight phase. The selected set of features 128 and the feature importance value 136 are described in more detail below with reference to FIGS. 2-8.

In some implementations, the processor(s) 106 can also be configured to adjust a parameter of a planned flight of the aircraft, where the planned flight is subsequent to the analyzed flight of the aircraft. For example, the processor(s) 106 can be configured to adjust a planned takeoff speed parameter for a subsequent flight of the aircraft. In a particular aspect, the processor(s) 106 can be configured to provide a verification indication of an initial weight of the aircraft prior to the planned flight. For example, the processor(s) 106 can provide the verification indication to the pilot prior to the planned flight to indicate one or more parameters of the planned flight are out of line with the estimate of the takeoff weight 138. As a particular example, the processor(s) 106 can provide a user with a warning that the estimate of the takeoff weight 138 is 5% lighter than industry average, 5% lighter than takeoff weights for similar routes for this aircraft type, etc.

In operation, the computing device 102 can receive the input data 130 from the device(s) 104, where the input data 130 corresponds to trajectory data of a flight of an aircraft. For example, the input data 130 can include ADS-B surveillance data from a flight of a particular aircraft. The ADS-B surveillance data can include a plethora of data fields over time frames associated with the flight, including data related to airborne position, surface position, aircraft identification, airborne velocity, aircraft status, aircraft operational status, etc. Based on the trajectory data, the computing device 102 can generate the set of input parameters 118 from the ADS-B surveillance data, from synthetic data based on a BADA model of the aircraft, or some combination thereof. The trained model 124 can then use the set of input parameters 118 to generate the estimate of the takeoff weight 138.

In order to do this accurately and efficiently, the set of input parameters 118 can include the first subset of parameters 120 corresponding to a takeoff phase of the flight and the second subset of parameters 122 corresponding to the climb phase of the flight. For example, the computing device 102 can process, using the trained model 124, the first subset of parameters 120-including (1) a mean specific energy parameter and a maximum specific energy gradient parameter obtained from the BADA model, and (2) a time span parameter and a maximum acceleration parameter obtained from the surveillance data- and the second subset of parameters 122 including (1) a climb thrust parameter and specific energy gradient obtained from the BADA model, and (2) a maximum gamma parameters and parameters associated with the maximum, minimum, and mean of the aircraft's rate of climb obtained from the surveillance data. In some configurations, the computing device 102 can process additional parameters of the set of input parameters 118 using the trained model 124. The trained model 124 can be configured to generate the estimate of the takeoff weight 138 of the aircraft.

In some implementations, the computing device 102 can be associated with, integrated into, or otherwise included in an aircraft, aircraft management system, or other larger system. The system 100 can also include components not illustrated in FIG. 1. For example, the computing device 102 can also include a receiver configured to receive the input data 130 from the device(s) 104. The receiver can be configured to receive the data, for example, via a computer bus. As an additional example, the system 100 can also include one or more input/output interfaces, one or more network interfaces, etc. Further, although FIG. 1 illustrates the memory 108 of the system 100 as storing certain data, more, fewer, and/or different data can be present within the memory 108 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the components of the device(s) 104, training data set 142, or some combination thereof. Such component(s) can be located remotely from the computing device 102 and accessed via a modem of the computing device 102.

As an additional example, in some implementations one or more components external to the computing device 102 can be configured to train the trained model 124. The trained model 124 can then be included or otherwise associated with the computing device 102 such that the computing device 102 can be configured to process the set of input parameters 118 using the trained model 124 to generate the estimate of the takeoff weight 138. In some aspects, the trained model 124 can be trained by a first set of components separate from the computing device 102 and hosted by another set of components separate from the computing device 102.

Further, although FIG. 1 illustrates the computing device 102 and the device(s) 104 as separate, other configurations are possible without departing from the scope of the subject disclosure. For example, the computing device 102 and the device(s) 104 can be integrated into an aircraft service provider. As an additional example, one or more components of the computing device 102 can be distributed across a plurality of computing devices (e.g., a group of processor cores).

Still further, although FIG. 1 illustrates the computing device 102, the device(s) 104, and the training data set 142 as separate, other configurations are possible without departing from the scope of the subject disclosure. For example, components of the computing device 102 and components of the device(s) 104 can be integrated into one or more electronic devices distinct from the computing device 102, integrated with the computing device 102, or some combination thereof.

FIG. 2 illustrates an example architecture 200 for aircraft takeoff weight estimation, in accordance with some examples of the subject disclosure. The example architecture 200 includes a set of inputs 202 communicatively coupled to a data preprocessing system 206, the feature extractor 114, the feature selector 116, a regression methodology system 232, and one or more outputs 242.

Generally, the example architecture 200 corresponds to the structure and function of the system 100 of FIG. 1. For example, the inputs 202 generally corresponds to the device(s) 104; and the data preprocessing system 206, the feature extractor 114, and the feature selector 116 generally correspond to one or more components of and/or functions performed by the processor(s) 106.

As described above with reference to FIG. 1, the device(s) 104 and the training data set 142 can be configured to store the surveillance data 140, the QAR data 144, the synthetic data 146, or some combination thereof for communication to the computing device 102. Referring to FIG. 2, the surveillance data 140, the QAR data 144, or some combination thereof can be stored as surveillance data 203. The inputs 202 can be configured to transmit some or all of the surveillance data 203 and the synthetic data 146 as input data 238 to the data preprocessing system 206. In a particular aspect, the inputs 202 can include one or more of any appropriate electronic device(s) configured to store the surveillance data 203, the synthetic data 146, or some combination thereof, including network storage devices, servers, personal computers, laptop computers, smart phones, etc.; various input/output devices such as a keyboard, mouse, touchscreen, etc.; data transfer from another electronic device; other appropriate means for storing the input data, or some combination thereof.

The inputs 202 can communicate the input data 238 to the data preprocessing system 206. The data preprocessing system 206 can be any appropriate electronic device configured to process the input data 238 to generate processed data 212. For example, the data preprocessing system 206 can be included in, contain, share functionality with, or be otherwise associated with the computing device(s) 102 of FIG. 1. In some aspects, the data preprocessing system 206 can include a data cleaning and filtering system 208 configured to, for example, ensure data integrity of the input data 238, filter the input data 238 for a particular operation, etc. In the same or alternative aspects, the data preprocessing system 206 can include a flight phase data division system 210 configured to divide some or all of the input data 238 into trajectory data associated with one or more flight phases, as described above with reference to FIG. 1.

In some implementations, the data preprocessing system 206 can be configured to generate processed data 212, which can include the cleaned, filtered, and/or flight phase-divided data. The data preprocessing system 206 can then communicate the processed data 212 to the feature extractor 114.

As described in more detail above with reference to FIG. 1, the feature extractor 114 can be configured to extract a plurality of features 126, including identifying one or more data points, data types, etc. from the processed data 212 that are particularly relevant to a particular phase of a flight, a particular aircraft type, etc. In the example architecture of FIG. 2, the feature extractor 114 is configured to identify a plurality of data types relevant to each of the five flight phases.

For example, in FIG. 2, the feature extractor 114 is configured to determine multiple subsets of the set of the plurality of features 126, including a subset of features 214 corresponding to a ground roll phase of the flight, the subset of features 214 including a maximum ground speed, mean flap angle, weight estimation, ground roll distance, or some combination thereof. In a particular configuration, the maximum ground speed, mean flap angle, and ground roll distance can be generated, calculated, retrieved, or otherwise obtained from the surveillance data 203, while the weight estimation is marked with an asterisk(*) to identify it a feature that can be generated, calculated, retrieved, or otherwise obtained from the synthetic data 146 (e.g., based on the BADA model of the particular aircraft).

The maximum ground speed can be obtained from the surveillance data 203 by using the velocity of the aircraft when the aircraft first lifts off. The ground roll distance can also be obtained from the surveillance data 203. The mean flap angle can be obtained using the lift coefficient (CL) at ground roll from the surveillance data and the aerodynamic lift formula.

As another example, in FIG. 2, the set of the plurality of features 126 of FIG. 1 can include a subset of features 216 corresponding to a takeoff phase of the flight, the subset of features 216 including a mean specific energy of the particular aircraft, a takeoff time span, a maximum acceleration, a maximum specific energy gradient, or some combination thereof. In a particular configuration, the takeoff time span and maximum acceleration can be generated, calculated, retrieved, or otherwise obtained from the surveillance data 203), while the mean specific energy of the particular aircraft can be generated, calculated, retrieved, or otherwise obtained from the synthetic data 146. The maximum specific energy gradient can be obtained from a combination of the surveillance data 203 and the synthetic data 146 using the formula described in more detail above with reference to FIG. 1. The mean specific energy $(E_{specific})$ can be obtained from a combination of the surveillance data 203 and the synthetic data 146 according to the formula: $E_{specific} = 0.5(V^2) + (g_0 * h)$, where $V$ is the airspeed of the aircraft, $g_0$ is the gravitational constant of the Earth's surface, and h is the altitude.

As an additional example, in FIG. 2, the set of the plurality of features 126 of FIG. 1 can include a subset of features 218 corresponding to a climb phase of the flight, the subset of features 218 including a climb thrust; maximum, minimum, and mean values for the rate of climb; and a maximum flight path angle ("gamma"). In a particular configuration, the rate of climb values and the maximum gamma can be generated, calculated, retrieved, or otherwise obtained from the surveillance data 203, while the climb thrust can be generated, calculated, retrieved, or otherwise obtained from a combination of the surveillance data 203 and the synthetic data 146. For example, the climb thrust can be calculated according to one or more BADA equations taking altitude and Mach number (from the surveillance data 203) as inputs and generating a set of climb thrust values for each point of the climb trajectory. The set of values can be averaged (or other statistical analyses applied) to generate a climb thrust value.

As a further example, in FIG. 2, the set of the plurality of features 126 of FIG. 1 can include a subset of features 220 corresponding to a cruise phase of the flight, the subset of features 220 including a maximum specific energy, a travel duration, a maximum altitude, a maximum mach, a maximum calibrated air speed ("CAS"), or some combination thereof. In a particular configuration, the travel duration, maximum altitude, and maximum mach can be generated, calculated, retrieved, or otherwise obtained from the surveillance data 203, while the maximum specific energy can be generated, calculated, retrieved, or otherwise obtained from the synthetic data 146 (e.g., based on the BADA model of the particular aircraft).

As a still further example, in FIG. 2, the set of the plurality of features 126 of FIG. 1 can include a subset of features 222 corresponding to a landing phase of the flight, the subset of features 222 including a landing weight estimation, an approach speed, a mean flap angle, or some combination thereof. In a particular configuration, the approach speed and the mean flap angle can be generated, calculated, retrieved, or otherwise obtained from the surveillance data 203, while the landing weight estimation can generated, calculated, retrieved, or otherwise obtained from the synthetic data 146.

In the example of FIG. 2, the landing phase can include trajectory data from zero to two nautical miles before touching down. The landing weight estimation can be calculated according to the aerodynamic lift formula and the stall speed of the particular aircraft. The stall speed ($V_S$) can be calculated using the formula

$$V_S = \frac{V_{app} - V_W}{S}(2),$$

where S is an approximation of the relationship between the stall speed and the nominal speed for the landing of the aircraft (e.g., 1.23), $V_W$ is an approximation of wind conditions at landing (e.g., 7 knots), and $V_{app}$ is the approach speed of the aircraft, which can be obtained from the surveillance data.

In some implementations, the features extracted by the feature extractor 114 can include more, fewer, and/or different features than those illustrated in FIG. 2. As described in more detail below with reference to the feature selector 116, the features selected to correspond to the set of input parameters 118 of FIG. 1 can vary depending on the particular aircraft, the aircraft type, the flight phases selected, etc. The feature extractor 114 can be configured to only extract those features selected by the feature selector 116 (e.g., after training the trained model 124), a superset of features for consideration by the feature selector 116 (e.g., for training a plurality of trial models and selecting one of the plurality of trained models based on a performance criterion), or some combination thereof.

The feature extractor 114 can be configured to communicate data associated with the extracted features 126 to the feature selector 116. In the example of FIG. 2, the feature selector 116 can be configured to select a set of the extracted features 126 based at least on one or more feature importance values (e.g., the feature importance value 136 of FIG. 1). The feature importance value(s) can be associated with a particular aircraft, a particular aircraft type, a particular flight phase, etc.

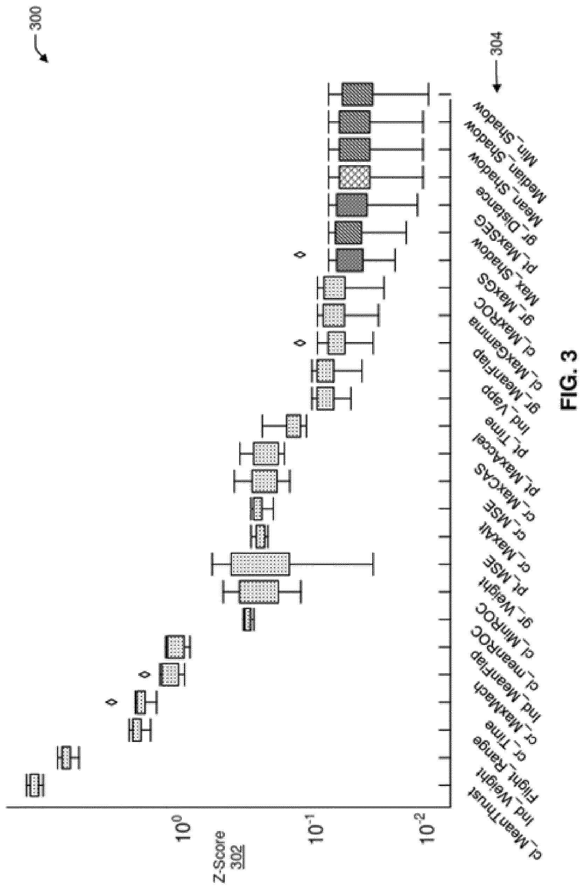

In a particular configuration, the feature selector 116 can consider a plurality of features for a particular aircraft type (e.g., a Boeing 777). In the example of FIG. 2, the feature selector 116 is configured to evaluate a plurality of features according to the "z-score" of each feature, as described in more detail below with reference to FIG. 3. For a complex model, it can be difficult to correlate accuracy and interpretability of a particular feature; analyzing the z-score of each feature can ease this difficulty. The z-score is determined by an individual feature's deviation from the mean values of the set of analyzed features.

FIG. 3 illustrates a box plot 300 of the z-scores 302 of a plurality of features 304, in accordance with some examples of the subject disclosure. In some aspects, the plurality of features 304 includes the extracted features 126 as well as a plurality of shadow features introduced for the purposes of evaluating the extracted features 126. In the example of FIG. 3, the shadow features include "Max_Shadow," "Mean_Shadow," "Median_Shadow," and "Min_Shadow." The extracted features 126 include the climb phase mean thrust ("cl_MeanThurst"), the landing phase weight estimation ("lnd_weight"), flight range ("Flight_Range"), the cruise phase time ("cr_Time"), the cruise phase maximum mach ("cr_MaxMach"), the landing phase mean flap angle ("lnd_Mean_Flap"), the climb phase mean rate of climb ("cl_mean-ROC"), the climb phase minimum rate of climb ("cl_minROC"), the ground roll weight estimation ("gr_Weight"), the takeoff phase mean specific energy ("pt_MSE"), the cruise phase maximum altitude ("cr_MaxAlt"), the cruise phase mean specific energy ("cr_MSE"), the cruise phase maximum CAS ("cr_MaxCAS"), the takeoff phase time ("pt_Time"), the landing phase approach speed ("ldn_Vapp"), the ground roll phase mean flap angle ("gr_MeanFlap"), the climb phase maximum gamma ("cl_MaxGamma"), the climb phase maximum rate of climb ("cl_MaxROC"), the ground roll phase maximum ground speed ("gr_MaxGS"), the takeoff phase maximum specific energy gradient ("pt_MaxSEG"), and the ground roll phase distance ("gr_Distance"). The plurality of features 304 can include features associated with a particular flight phase (e.g., takeoff phase time, etc.) as well as features associated with the flight generally and not limited to a particular flight phase (e.g., flight range).

In the example of FIG. 3, the ground roll phase distance feature is identified as unimportant, due to its z-score being roughly equivalent to that of the shadow feature z-scores. Similarly, the takeoff phase maximum specific energy gradient and the ground roll phase maximum ground speed features are identified as tentatively important due to their z-scores being slightly higher than that of the z-scores of three of the shadow features but generally equivalent to that of the fourth shadow feature, Max_Shadow. The remaining nineteen features were identified as features to be selected as part of the selected features 128 to be used as inputs to the trained model(s) 124.

The z-scores of individual features may vary depending on a particular trained model. Referring again to FIG. 2, the feature selector 116 applies a Shapley Additive Explanations ("SHAP") algorithm at 227 for different models, and selects the most relevant features at 228. The feature selector 116 can be configured to communicate data associated with the selected features 128 to the regression methodology system 232. The regression methodology system 232 can include one or more components configured to create one or more machine learning models, train the model(s), evaluate the model(s), apply the model(s), or some combination thereof. For example, the regression methodology system 232 can include one or more components configured to create the machine learning model(s) 234. In a particular configuration, creating the machine learning model(s) 234 can include creating a plurality of regression models such as an extra trees regressor, linear regression model, gradient boosting regressor, gaussian process regressor, etc.

The regression methodology system 232 can also include, at 236, splitting data into train and test sets. In a particular configuration, the data can include the surveillance data 203, the synthetic data 146, or some combination thereof. For example, QAR data for three different aircraft types can be split into a training set of 80% of the QAR data and a test set of 20% of the QAR data, divided randomly. In another example, the training data can include a portion the synthetic data 146 and the test data can include a portion of the surveillance data 203.

The regression methodology system 232 can also include one or more components configured to train, using the training data, the model(s) created at 234 to generate the trained model(s) 124. The regression methodology system 232 can also include one or more components configured to, using the test data, evaluate the trained model(s) 124. Testing the trained model(s) 124 can include evaluating the trained model 124 to predict the takeoff weight of the aircraft from the selected features 128.

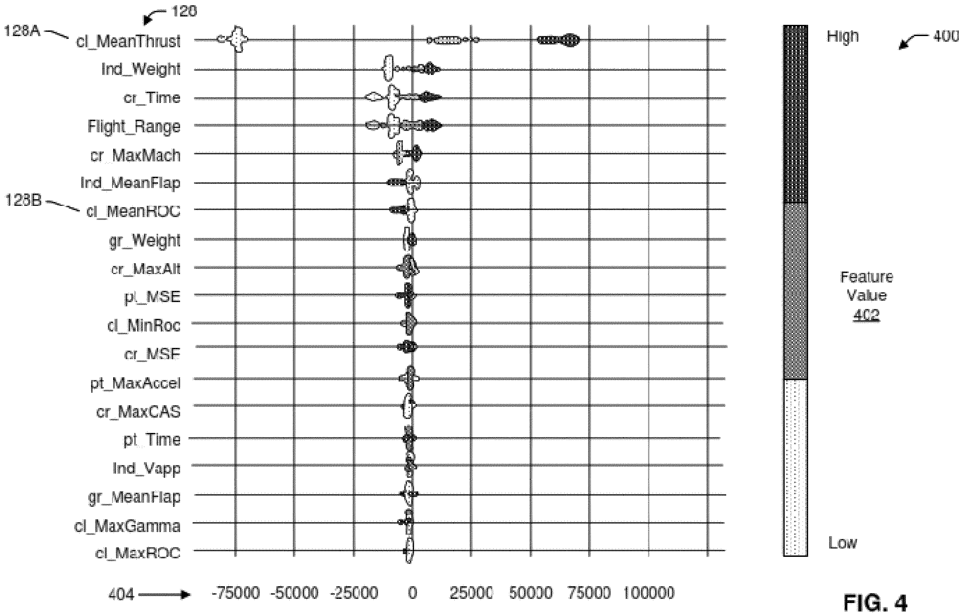

The regression methodology system 232 can also include one or more components configured to, at 240, calculate the impact of the selected features 128 on the trained model(s) 124. FIG. 4 below illustrates an example visualization of the impact of the selected features 128 on a particular trained model 124. The SHAP algorithm assigns each of the selected features 128 a SHAP value associated with the feature's importance.

FIG. 4 illustrates an example visualization 400 of the impact of the set of the selected features 128, in accordance with some examples of the subject disclosure. In the example visualization 400 of FIG. 4, the SHAP values 404 of each of the selected features 128 are plotted in descending order, illustrating each feature's importance. For example, the SHAP values 404 for mean thrust in the climb phase ("cl_MeanThrust") 128A indicate that if thrust in the climb phase is high in general, then the takeoff weight of that aircraft is also high and vice versa. As another example, the mean rate of climb in the climb phase ("cl_MeanROC") 128B is inversely correlated to takeoff weight-a heavier aircraft climbs more slowly. FIG. 4 illustrates the SHAP values 404 for the selected features 128 described above with reference to FIGS. 2-3.

Referring again to FIG. 2, the regression methodology system 232 can also include one more components configured to process the selected set of features 128 of FIG. 1 using the trained model 124 to generate the estimate of the takeoff weight 138 of the aircraft. The regression methodology system 232 can also be configured to communicate the estimate of the takeoff weight 138 to one or more outputs 242. The output(s) 242 can be a component of, include, be integrated with, or otherwise associated with an electronic device component configured to output data to a user, another electronic device, an electronic device components, or any combination thereof. For example, the output 242 can include a display component such as a screen of a computing device for displaying the estimate of the takeoff weight 138.

As noted above, the regression methodology system 232 can include one or more components configured to evaluate the one or more machine learning models. In a particular configuration, creating the machine learning model(s) 234 can include creating a plurality of regression models. Each of these models can be evaluated based on one or more performance criteria. For example, one of the performance criteria can be based on the test data subset that includes real data (e.g., some or all of the surveillance data 203 of FIG. 2).

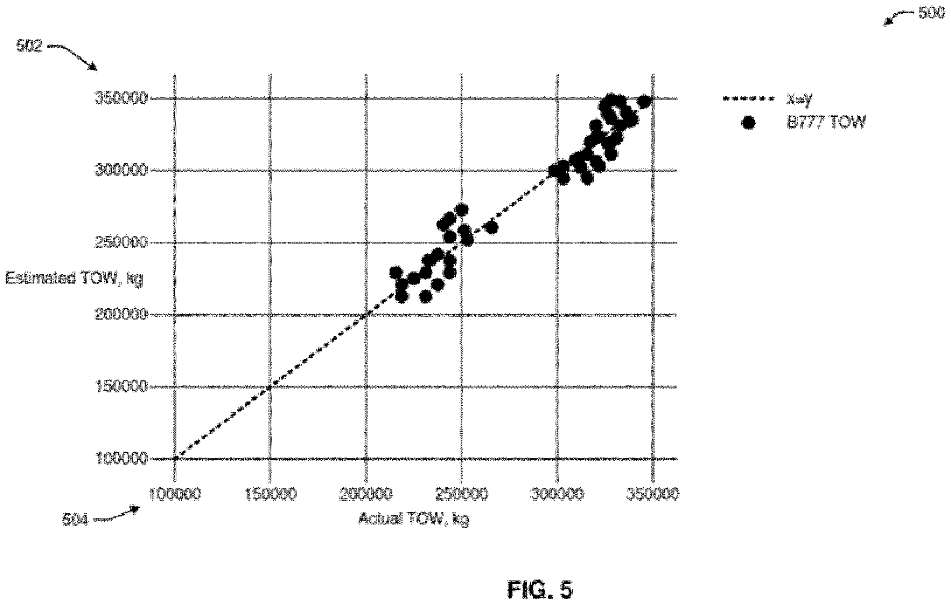

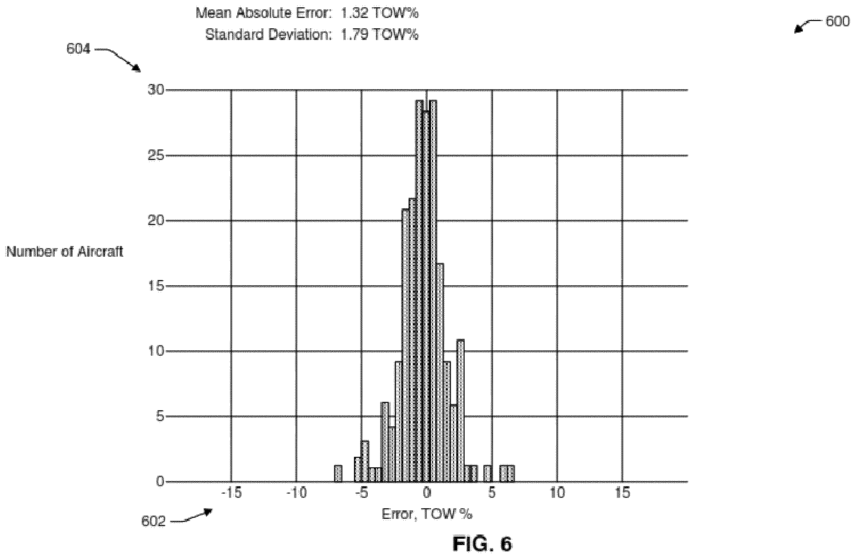

FIG. 5 illustrates an example plot 500 of estimated takeoff weight ("TOW") values 502 for a Boeing 777 vs. actual takeoff weight values 504, in accordance with some examples of the subject disclosure. The plot 500 illustrates the performance of the trained model 124 of FIGS. 1-4 trained with an extra trees regressor for more than 1,000 flights of a Boeing 777 with a mean actual takeoff weight of 365 tons of kg and a range from 215-351 tons of kg. FIG. 6 illustrates an example bar graph 600 illustrating the number of aircraft 604 for each of the absolute error values 602 for the performance of the trained model 124 of FIGS. 1-5, in accordance with some examples of the subset disclosure. The example of FIG. 6 also indicates that the standard deviation for the data set illustrated in the plot 500 is approximately 1.79 takeoff weight percentage. Table 1 below illustrates a comparison of the performance of a plurality of trained models performing the role described above with reference to FIGS. 5-6.

TABLE 1

| Model Regression Type | Mean Absolute Percentage Error | Standard Deviation |
|---|---|---|
| Extra Trees Regressor | 1.32% TOW | 1.79% TOW |
| Linear Regression | 1.17% TOW | 1.63% TOW |
| Gradient Boosting Regressor | 1.44% TOW | 1.84% TOW |
| Gaussian Process Regressor | 1.84% TOW | 2.45% TOW |

In some implementations, the trained model 124 of FIGS. 1-6 can be trained on a training data set for a particular aircraft and/or aircraft type. In the same or alternative implementations, the trained model 124 can be trained on a training data set for a plurality of aircraft and/or a plurality of aircraft types in order to prevent the trained model 124 from overfitting to the particular aircraft and/or aircraft type.

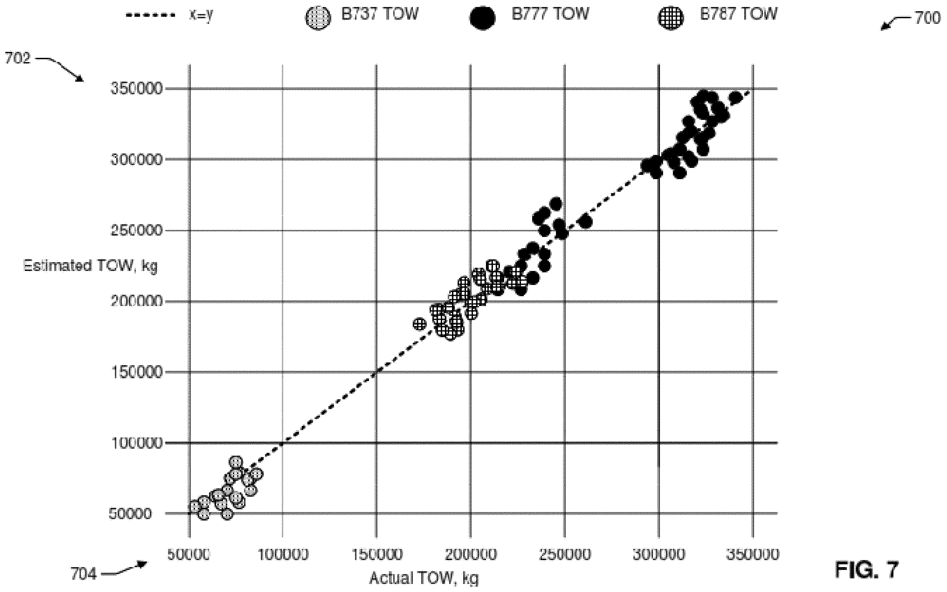

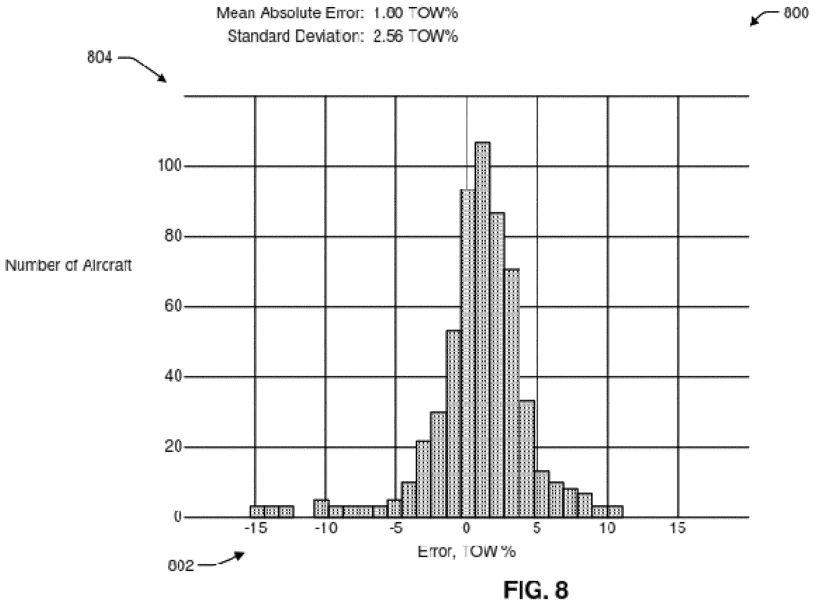

FIG. 7 illustrates an example plot 700 of estimated takeoff weight values 702 for three types of aircraft-the Boeing 737, the Boeing 777, and the Boeing 787-vs. actual takeoff weight values 704, in accordance with some examples of the subject disclosure. The plot 700 illustrates the performance of the trained model 124 trained on over 2,800 flights of aircraft having a range of takeoff weights. For example, the mean takeoff weights of the aircraft used for this training data set ranged from 65-351 tons of kg. FIG. 8 illustrates an example bar graph 800 illustrating the number of aircraft 804 for each of the absolute error values 802 for the performance of the trained model 124 of FIGS. 1-4 and 7, in accordance with some examples of the subject disclosure. The example of FIG. 8 indicates that the performance of the more complex trained model 124 can result in a higher mean absolute error (e.g., 1.80%) and standard deviation (e.g., 2.56%) than training on a particular aircraft type, while maintaining an accuracy within 2% of the actual takeoff weight.

Table 2 below illustrates a comparison of the performance of a plurality of trained models performing the role described above with reference to FIGS. 7-8.

TABLE 2

| Model Regression Type | Mean Absolute Percentage Error | Standard Deviation |
|---|---|---|
| Extra Trees Regressor | 1.80% TOW | 2.56% TOW |
| Linear Regression | 6.13% TOW | 10.60% TOW |
| Gradient Boosting Regressor | 2.26% TOW | 3.20% TOW |
| Gaussian Process Regressor | 6.30% TOW | 7.87% TOW |

Table 2 illustrates that the type of the trained model 124 used for a particular implementation can vary depending on the design constraints for that particular implementation. For example, according to Table 1 above, the linear regression model performed best for a particular aircraft type when trained on training data for that particular aircraft type. However, Table 2 illustrates that the linear regression model suffered performance limitations for a plurality of aircraft types. Comparing Tables 1-2 illustrates that the extra trees regressor model performed well in both configurations.

Referring again to FIG. 2, the various components of the regression methodology system 232 can be performed by one or more components of the computing device 102 of FIG. 1. For example, the processor(s) 106 can be configured to include one or more components (e.g., the input parameters processor 112) to create the machine learning model, split the data into training and test sets, calculate the impact of the features of the model, or some combination thereof.

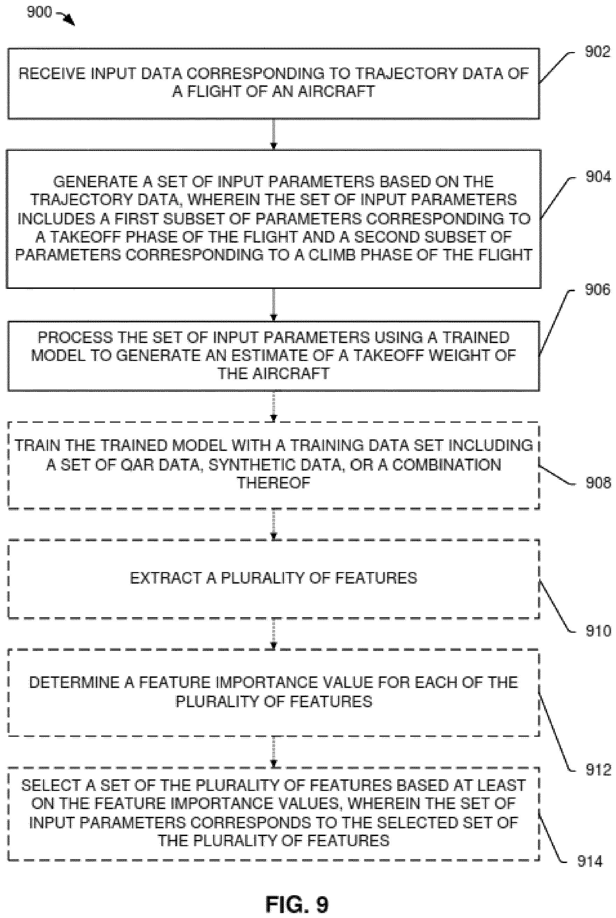

FIG. 9 is a flow chart of an example method 900 for aircraft takeoff weight estimation, in accordance with some examples of the subject disclosure. The method 900 can be initiated, performed, or controlled by one or more processors executing instructions, such as by the processor(s) 106 of FIG. 1 executing instructions from the memory 108.

In some implementations, the method 900 includes, at 902, receiving input data corresponding to trajectory data of a flight of an aircraft. For example, the processor(s) 106 of FIG. 1 can be configured to receive, from the device(s) 104, the input data 130 corresponding to trajectory data of a flight of an aircraft.

In the example of FIG. 9, the method 900 can also include, at 904, generating a set of input parameters based on the trajectory data, wherein the set of input parameters include a first subset of parameters corresponding to a takeoff phase of the flight and a second subset of parameters corresponding to a climb phase of the flight. For example, the processor(s) 106 of FIG. 1 can be configured to generate the set of input parameters 118 based on the trajectory data, wherein the set of input parameters 118 include the first subset of parameters 120 corresponding to a takeoff phase of the flight and the second subset of parameters 122 corresponding to a climb phase of the flight.

In the example of FIG. 9, the method 900 can also include, at 906, processing the set of input parameters using a trained model to generate an estimate of a takeoff weight of the aircraft. For example, the processor(s) 106 can be configured to process the set of input parameters 118 using the trained model to generate the estimate of a takeoff weight 138 of the aircraft

Although the method 900 is illustrated as including a certain number of steps, more, fewer, and/or different steps can be included in the method 900 without departing from the scope of the subject disclosure. For example, the method 900 can optionally include additional steps, as described in more detail below.

In the example of FIG. 9, the method 900 can also optionally include, at 908, training the trained model with a training data set including a set of QAR data, synthetic data, or a combination thereof. For example, the processor(s) 106 of FIG. 1 can be configured to train the trained model 124 with the training data set 142 including the set of QAR data 144, synthetic data 146, or a combination thereof.

In the example of FIG. 9, the method 900 can also optionally include, at 910, extracting a plurality of features. For example, the processor(s) 106 of FIG. 1 can be configured to extract the plurality of features 126.

In the example of FIG. 9, the method 900 can also optionally include, at 912, determining a feature importance value for each of the plurality of features. For example, the processor(s) 106 of FIG. 1 can be configured to determine the feature importance value 136 for each of the plurality of features 126.

In the example of FIG. 9, the method 900 can also optionally include, at 914, selecting a set of the plurality of features based at least on the feature importance values, wherein the set of input parameters corresponds to the selected set of the plurality of features. For example, the processor(s) 106 of FIG. 1 can be configured to select the set of the plurality of features 128 based at least on the feature importance values 136, wherein the set of input parameters 118 corresponds to the selected set of the plurality of features 128.

As noted above, more, fewer, and/or different steps can be included in the method 900 without departing from the scope of the subject disclosure. For example, the method 900 can vary depending on the count and variety of input data received. In a particular configuration, the system 100 of FIG. 1 can be configured to process the set of input parameters 118 using a plurality of trained models 124 serially, evaluating each of the plurality of trained models 124 before proceeding to process the set of input parameters 118 with the next of the plurality of trained models 124.

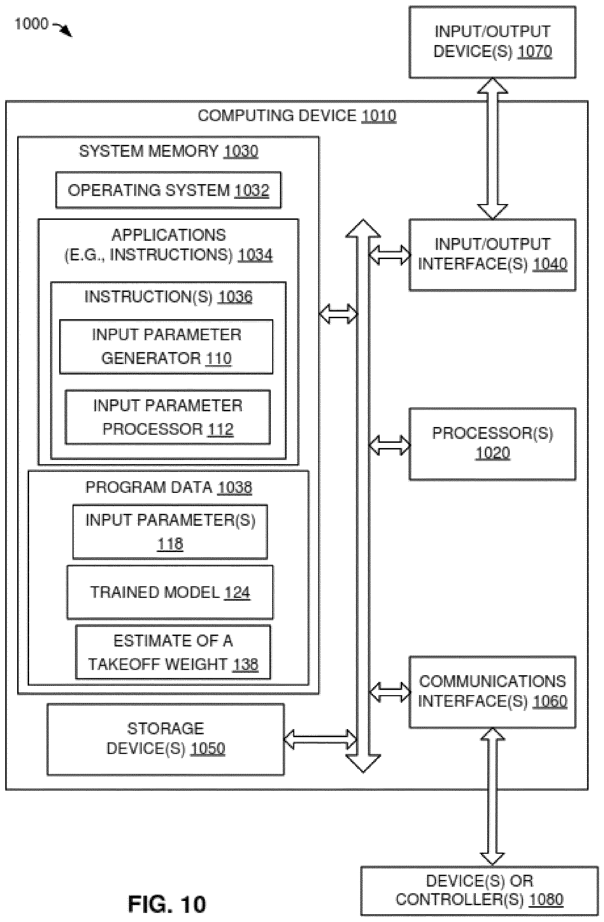

FIG. 10 is a block diagram of a computing environment 1000 including a computing device 1010 configured to support aspects of computer-implemented methods and computer-executable program instructions (or code), in accordance with some examples of the subject disclosure. For example, the computing device 1010, or portions thereof, is configured to execute instructions to initiate, perform, or control one or more operations described in more detail above with reference to FIGS. 1-9. In a particular aspect, the computing device 1010 can include, correspond to, or be included within the computing device 102, the device(s) 104, the training data set 142 of FIG. 1; the inputs 202, the data preprocessing system 206, the regression methodology system 232 of FIG. 2; one or more servers, one or more virtual devices, or a combination thereof.

The computing device 1010 includes one or more processors 1020. In a particular aspect, the processor(s) 1020 correspond to the processor(s) 106 of FIG. 1. The processor(s) 1020 are configured to communicate with system memory 1030, one or more storage devices 1050, one or more input/output interfaces 1040, one or more communications interfaces 1060, or any combination thereof. The system memory 1030 includes volatile memory devices (e.g., random access memory (RAM) devices), nonvolatile memory devices (e.g., read-only memory (ROM) devices, programmable read-only memory, and flash memory), or both. The system memory 1030 stores an operating system 1032, which can include a basic input/output system for booting the computing device 1010 as well as a full operating system to enable the computing device 1010 to interact with users, other programs, and other devices. The system memory 1030 stores system (program) data 1038, such as the input parameter(s) 118, the trained model 124, the estimate of the takeoff weight 138 of FIG. 1, or a combination thereof.

The system memory 1030 includes one or more applications 1034 (e.g., sets of instructions) executable by the processor(s) 1020. As an example, the one or more applications 1034 include the instructions 1036 executable by the processor(s) 1020 to initiate, control, or perform one or more operations described with reference to FIGS 1-9. To illustrate, the one or more applications 1034 include the instructions 1036 executable by the processor(s) 1020 to initiate, control, or perform one or more operations described with reference to receiving the input data 130, generating the set of input parameters 118, and processing the set of input parameters 118 using the trained model 124 to generate the estimate of the takeoff weight 138.

In a particular implementation, the system memory 1030 includes a non-transitory, computer readable medium (e.g., a computer-readable storage device) storing the instructions 1036 that, when executed by the processor(s) 1020, cause the processor(s) 1020 to initiate, perform, or control operations for aircraft takeoff weight estimation. The operations include receiving input data corresponding to trajectory data of a flight of an aircraft. The operations also include generating a set of input parameters based on the trajectory data, wherein the set of input parameters include a first subset of parameters corresponding to a takeoff phase of the flight and a second subset of parameters corresponding to a climb phase of the flight. The operations also include processing the set of input parameters using a trained model to generate an estimate of a takeoff weight of the aircraft.

The one or more storage devices 1050 include nonvolatile storage devices, such as magnetic disks, optical disks, or flash memory devices. In a particular example, the storage devices 1050 include both removable and non-removable memory devices. The storage devices 1050 are configured to store an operating system, images of operating systems, applications (e.g., one or more of the applications 1034), and program data (e.g., the program data 1038). In a particular aspect, the system memory 1030, the storage devices 1050, or both, include tangible computer-readable media. In a particular aspect, one or more of the storage devices 1050 are external to the computing device 1010.

The one or more input/output interfaces 1040 enable the computing device 1010 to communicate with one or more input/output devices 1070 to facilitate user interaction. For example, the one or more input/output interfaces 1040 can include a display interface, an input interface, or both. For example, the input/output interface 1040 is adapted to receive input from a user, to receive input from another computing device, or a combination thereof. In some implementations, the input/output interface 1040 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 1070 include one or more user interface devices and displays, including some combination of buttons, keyboards, pointing devices, displays, speakers, microphones, touch screens, and other devices. In a particular configuration, the input/output interfaces 1040 can include the inputs 202, the output 242 of FIG. 2, or some combination thereof.

The processor(s) 1020 are configured to communicate with devices or controllers 1080 via the one or more communications interfaces 1060. For example, the one or more communications interfaces 1060 can include a network interface. The devices or controllers 1080 can include, for example, the device(s) 104, the training data set 142 of FIG. 1, the inputs 202, the data preprocessing system 206, the output 242 of FIG. 2, or some combination thereof.

In some implementations, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGS 1-9. In some implementations, part or all of one or more of the operations or methods of FIGS. 1-9 can be implemented by one or more processors (e.g., one or more central processing units (CPUs), one or more graphics processing units (GPUs), one or more digital signal processors (DSPs)) executing instructions, by dedicated hardware circuitry, or any combination thereof.

In conjunction with the described implementations, a device includes means for receiving input data corresponding to trajectory data of a flight of an aircraft. For example, the means for receiving input data includes the computing device 102, the processor(s) 106 of FIG. 1, the inputs 202 of FIG. 2, the computing device 1010, the input/output interface(s) 1040, the processor(s) 1020 of FIG. 10, one or more other circuits or components configured to input data corresponding to trajectory data of a flight of an aircraft, or any combination thereof.

The device also includes means for generating a set of input parameters based on the trajectory data, wherein the set of input parameters include a first subset of input parameters corresponding to a takeoff phase of a flight and a second subset of parameters corresponding to a climb phase of the flight. For example, the means for generating the set of input parameters 118 includes the computing device 102, the processor(s) 106, the input parameter generator 110 of FIG. 1, the computing device 1010, the processor(s) 1020 of FIG. 10, one or more other circuits or components configured to generate a set of input parameters based on the trajectory data, wherein the set of input parameters include a first subset of input parameters corresponding to a takeoff phase of a flight and a second subset of parameters corresponding to a climb phase of the flight, or any combination thereof.

The device also includes means for processing the set of input parameters using a trained model to generate an estimate of a takeoff weight of the aircraft. For example, the means for processing the set of input parameters includes the computing device 102, the processor(s) 106, input parameter processor 112 of FIG. 1, the regression methodology system 232 of FIG. 2, the computing device 1010, the processor(s) 1020 of FIG. 10, one or more other circuits or components configured to process the set of input parameters using the trained model to generate the estimate of the takeoff weight of the aircraft, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and obtained from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following examples:

According to Example 1, a method includes receiving input data corresponding to trajectory data of a flight of an aircraft; generating a set of input parameters based on the trajectory data, wherein the set of input parameters include a first subset of parameters corresponding to a takeoff phase of the flight and a second subset of parameters corresponding to a climb phase of the flight; and processing the set of input parameters using a trained model to generate an estimate of a takeoff weight of the aircraft.

Example 2 includes the method of Example 1, wherein the set of input parameters further includes a third subset of parameters corresponding to a ground roll phase of the flight, a cruise phase of the flight, or a landing phase of the flight.

Example 3 includes the method of Example 1 or Example 2, wherein the set of input parameters further includes a subset of parameters corresponding to each of a ground roll phase of the flight, a cruise phase of the flight, and a landing phase of the flight.

Example 4 includes the method of any of Examples 1 to 3, wherein the input data corresponds to publicly available surveillance data associated with the flight of the aircraft.

Example 5 includes the method of Example 4, wherein the publicly available surveillance data includes automatic dependent surveillance-broadcast data from the aircraft.

Example 6 includes the method of any of Examples 1 to 5 and further includes adjusting a parameter of a planned flight of the aircraft, the planned flight subsequent to the flight of the aircraft.

Example 7 includes the method of Example 6 and further includes providing a verification indication of an initial weight of the aircraft prior to the planned flight.

Example 8 includes the method of any of Examples 1 to 7 and further includes training the trained model with a training data set including a set of quick access recorder data, synthetic data, or a combination thereof.

Example 9 includes the method of Example 8, wherein a portion of the synthetic data is generated from a base of aircraft data model of the aircraft.

Example 10 includes the method of Example 8 or Example 9, and further includes extracting a plurality of features; determining a feature importance value for each of the plurality of features; and selecting a set of the plurality of features based at least on the feature importance values, wherein the set of input parameters corresponds to the selected set of the plurality of features.

Example 11 includes the method of Example 10, wherein the feature importance value is associated with a particular aircraft type.

Example 12 includes the method of Example 10 or Example 11, wherein the set of the plurality of features includes a subset of features corresponding to a ground roll phase of the flight, the subset of features including a maximum ground speed, mean flap angle, weight estimation, ground roll distance, or some combination thereof.

Example 13 includes the method of any of Examples 10 to 12, wherein the set of the plurality of features includes a subset of features corresponding to a takeoff phase of the flight, the subset of features including a mean specific energy of the aircraft, a time span, a maximum acceleration, a maximum specific energy gradient, or some combination thereof.

Example 14 includes the method of any of Examples 10 to 13, wherein the set of the plurality of features includes a subset of features corresponding to a climb phase of the flight, the subset of features including a climb thrust, specific energy gradient, one or more rate of climb features, a maximum climb angle, or some combination thereof.

Example 15 includes the method of any of Examples 10 to 14, wherein the set of the plurality of features includes a subset of features corresponding to a cruise phase of the flight, the subset of features including a maximum specific energy, a travel duration, a maximum altitude, a maximum mach, a maximum calibrated air speed, or some combination thereof.

Example 16 includes the method of any of Examples 10 to 15, wherein the set of the plurality of features includes a subset of features corresponding to a landing phase of the flight, the subset of features including a weight estimation, an approach speed, a mean flap angle, or some combination thereof.

Example 17 includes the method of any of Examples 8 to 16, wherein training the trained model includes training a plurality of trial models and selecting one of the plurality of trained trial models based on a performance criterion.

Example 18 includes the method of Example 17 and further includes partitioning the training data set into a training data subset and a test data subset, and wherein the performance criterion is based on the test data subset.

Example 19 includes the method of Example 18, wherein the training data subset includes synthetic data and the test data subset includes real data.

According to Example 20, a device includes one or more processors configured to receive input data corresponding to trajectory data of a flight of an aircraft; generate a set of input parameters based on the trajectory data, wherein the set of input parameters include a first subset of parameters corresponding to a takeoff phase of the flight and a second subset of parameters corresponding to a climb phase of the flight; and process the set of input parameters using a trained model to generate an estimate of a takeoff weight of the aircraft.

Example 21 includes the device of Example 20, wherein the set of input parameters further includes a third subset of parameters corresponding to a ground roll phase of the flight, a cruise phase of the flight, or a landing phase of the flight.

Example 22 includes the device of Example 20 or Example 21, wherein the set of input parameters further includes a subset of parameters corresponding to each of a ground roll phase of the flight, a cruise phase of the flight, and a landing phase of the flight.

Example 23 includes the device of any of Examples 20 to 22, wherein the input data corresponds to publicly available surveillance data associated with the flight of the aircraft.

Example 24 includes the device of Example 23, wherein the publicly available surveillance data includes automatic dependent surveillance-broadcast data from the aircraft.

Example 25 includes the device of any of Examples 20 to 24, wherein the one or more processors are further configured to adjust a parameter of a planned flight of the aircraft, the planned flight subsequent to the flight of the aircraft.

Example 26 includes the device of Example 25, wherein the one or more processors are further configured to provide a verification indication of an initial weight of the aircraft prior to the planned flight.

Example 27 includes the device of any of Examples 20 to 26, wherein the one or more processors are further configured to train the trained model with a training data set including a set of quick access recorder data, synthetic data, or a combination thereof.

Example 28 includes the device of Example 27, wherein a portion of the synthetic data is generated from a base of aircraft data model of the aircraft.

Example 29 includes the device of Example 27 or Example 28, wherein the one or more processors are further configured to extract a plurality of features; determine a feature importance value for each of the plurality of features; and select a set of the plurality of features based at least on the feature importance values, wherein the set of input parameters corresponds to the selected set of the plurality of features.

Example 30 includes the device of Example 29, wherein the feature importance value is associated with a particular aircraft type.

Example 31 includes the device of Example 29 or Example 30, wherein the set of the plurality of features includes a subset of features corresponding to a ground roll phase of the flight, the subset of features including a maximum ground speed, mean flap angle, weight estimation, ground roll distance, or some combination thereof.

Example 32 includes the device of any of Examples 29 to 31, wherein the set of the plurality of features includes a subset of features corresponding to a takeoff phase of the flight, the subset of features including a mean specific energy of the aircraft, a time span, a maximum acceleration, a maximum specific energy gradient, or some combination thereof.

Example 33 includes the device of any of Examples 29 to 32, wherein the set of the plurality of features includes a subset of features corresponding to a climb phase of the flight, the subset of features including a climb thrust, specific energy gradient, one or more rate of climb features, a maximum climb angle, or some combination thereof.

Example 34 includes the device of any of Examples 29 to 33, wherein the set of the plurality of features includes a subset of features corresponding to a cruise phase of the flight, the subset of features including a maximum specific energy, a travel duration, a maximum altitude, a maximum mach, a maximum calibrated air speed, or some combination thereof.

Example 35 includes the device of any of Examples 29 to 34, wherein the set of the plurality of features includes a subset of features corresponding to a landing phase of the flight, the subset of features including a weight estimation, an approach speed, a mean flap angle, or some combination thereof.

Example 36 includes the device of any of Examples 27 to 35, wherein the one or more processors are further configured to train the trained model including training a plurality of trial models and selecting one of the plurality of trained trial models based on a performance criterion.

Example 37 includes the device of Example 36, wherein the one or more processors are further configured to partition the training data set into a training data subset and a test data subset, and wherein the performance criterion is based on the test data subset.

Example 38 includes the device of Example 37, wherein the training data subset includes synthetic data and the test data subset includes real data.

According to Example 39, a non-transitory computer-readable medium comprising instructions that, when executed by one or more processors, cause the one or more processors to receive input data corresponding to trajectory data of a flight of an aircraft; generate a set of input parameters based on the trajectory data, wherein the set of input parameters include a first subset of parameters corresponding to a takeoff phase of the flight and a second subset of parameters corresponding to a climb phase of the flight; and process the set of input parameters using a trained model to generate an estimate of a takeoff weight of the aircraft.

Example 40 includes the non-transitory computer-readable medium of Example 39, wherein the set of input parameters further includes a third subset of parameters corresponding to a ground roll phase of the flight, a cruise phase of the flight, or a landing phase of the flight.

Example 41 includes the non-transitory computer-readable medium of Example 39 or Example 40, wherein the set of input parameters further includes a subset of parameters corresponding to each of a ground roll phase of the flight, a cruise phase of the flight, and a landing phase of the flight.

Example 42 includes the non-transitory computer-readable medium of any of Examples 39 to 41, wherein the input data corresponds to publicly available surveillance data associated with the flight of the aircraft.

Example 43 includes the non-transitory computer-readable medium of Example 42, wherein the publicly available surveillance data includes automatic dependent surveillance-broadcast data from the aircraft.

Example 44 includes the non-transitory computer-readable medium of any of Examples 39 to 43, wherein the instructions, when executed by the one or more processors, further cause the one or more processors to adjust a parameter of a planned flight of the aircraft, the planned flight subsequent to the flight of the aircraft.

Example 45 includes the non-transitory computer-readable medium of Example 44, wherein the instructions, when executed by the one or more processors, further cause the one or more processors to provide a verification indication of an initial weight of the aircraft prior to the planned flight.

Example 46 includes the non-transitory computer-readable medium of any of Examples 39 to 45, wherein the instructions, when executed by the one or more processors, further cause the one or more processors to train the trained model with a training data set including a set of quick access recorder data, synthetic data, or a combination thereof.

Example 47 includes the non-transitory computer-readable medium of Example 46, wherein a portion of the synthetic data is generated from a base of aircraft data model of the aircraft.

Example 48 includes the non-transitory computer-readable medium of Example 46 or Example 47, wherein the instructions, when executed by the one or more processors, further cause the one or more processors to extract a plurality of features; determine a feature importance value for each of the plurality of features; and select a set of the plurality of features based at least on the feature importance values, wherein the set of input parameters corresponds to the selected set of the plurality of features.

Example 49 includes the non-transitory computer-readable medium of Example 48, wherein the feature importance value is associated with a particular aircraft type.

Example 50 includes the non-transitory computer-readable medium of Example 48 or Example 49, wherein the set of the plurality of features includes a subset of features corresponding to a ground roll phase of the flight, the subset of features including a maximum ground speed, mean flap angle, weight estimation, ground roll distance, or some combination thereof.

Example 51 includes the non-transitory computer-readable medium of any of Examples 48 to 50, wherein the set of the plurality of features includes a subset of features corresponding to a takeoff phase of the flight, the subset of features including a mean specific energy of the aircraft, a time span, a maximum acceleration, a maximum specific energy gradient, or some combination thereof.

Example 52 includes the non-transitory computer-readable medium of any of Examples 48 to 41, wherein the set of the plurality of features includes a subset of features corresponding to a climb phase of the flight, the subset of features including a climb thrust, specific energy gradient, one or more rate of climb features, a maximum climb angle, or some combination thereof.

Example 53 includes the non-transitory computer-readable medium of any of Examples 48 to 52, wherein the set of the plurality of features includes a subset of features corresponding to a cruise phase of the flight, the subset of features including a maximum specific energy, a travel duration, a maximum altitude, a maximum mach, a maximum calibrated air speed, or some combination thereof.

Example 54 includes the non-transitory computer-readable medium of any of Examples 48 to 53, wherein the set of the plurality of features includes a subset of features corresponding to a landing phase of the flight, the subset of features including a weight estimation, an approach speed, a mean flap angle, or some combination thereof.

Example 55 includes the non-transitory computer-readable medium of any of Examples 46 to 54, wherein the instructions, when executed by the one or more processors, further cause the one or more processors to train the trained model including training a plurality of trial models and selecting one of the plurality of trained trial models based on a performance criterion.

Example 56 includes the non-transitory computer-readable medium of Example 55, wherein the one or more processors are further configured to partition the training data set into a training data subset and a test data subset, and wherein the performance criterion is based on the test data subset.

Example 57 includes the non-transitory computer-readable medium of Example 56, wherein the training data subset includes synthetic data and the test data subset includes real data.

According to Example 58, a device includes means for receiving input data corresponding to trajectory data of a flight of an aircraft; means for generating a set of input parameters based on the trajectory data, wherein the set of input parameters include a first subset of parameters corresponding to a takeoff phase of the flight and a second subset of parameters corresponding to a climb phase of the flight; and means for processing the set of input parameters using a trained model to generate an estimate of a takeoff weight of the aircraft.

Example 59 includes the device of Example 58, wherein the set of input parameters further includes a third subset of parameters corresponding to a ground roll phase of the flight, a cruise phase of the flight, or a landing phase of the flight.

Example 60 includes the device of Example 58 or Example 59, wherein the set of input parameters further includes a subset of parameters corresponding to each of a ground roll phase of the flight, a cruise phase of the flight, and a landing phase of the flight.

Example 61 includes the device of any of Examples 58 to 60, wherein the input data corresponds to publicly available surveillance data associated with the flight of the aircraft.

Example 62 includes the device of Example 61, wherein the publicly available surveillance data includes automatic dependent surveillance-broadcast data from the aircraft.

Example 63 includes the device of any of Examples 58 to 62 and further includes means for adjusting a parameter of a planned flight of the aircraft, the planned flight subsequent to the flight of the aircraft.

Example 64 includes the device of Example 63 and further includes means for providing a verification indication of an initial weight of the aircraft prior to the planned flight.

Example 65 includes the device of any of Examples 58 to 64 and further includes means for training the trained model with a training data set including a set of quick access recorder data, synthetic data, or a combination thereof.

Example 66 includes the device of Example 65, wherein a portion of the synthetic data is generated from a base of aircraft data model of the aircraft.

Example 67 includes the device of Example 65 or Example 66, further includes means for extracting a plurality of features; means for determining a feature importance value for each of the plurality of features; and means for selecting a set of the plurality of features based at least on the feature importance values, wherein the set of input parameters corresponds to the selected set of the plurality of features.

Example 68 includes the device of Example 67, wherein the feature importance value is associated with a particular aircraft type.

Example 69 includes the device of Example 67 or Example 68, wherein the set of the plurality of features includes a subset of features corresponding to a ground roll phase of the flight, the subset of features including a maximum ground speed, mean flap angle, weight estimation, ground roll distance, or some combination thereof.

Example 70 includes the device of any of Examples 67 to 69, wherein the set of the plurality of features includes a subset of features corresponding to a takeoff phase of the flight, the subset of features including a mean specific energy of the aircraft, a time span, a maximum acceleration, a maximum specific energy gradient, or some combination thereof.

Example 71 includes the device of any of Examples 67 to 70, wherein the set of the plurality of features includes a subset of features corresponding to a climb phase of the flight, the subset of features including a climb thrust, specific energy gradient, one or more rate of climb features, a maximum climb angle, or some combination thereof.

Example 72 includes the device of any of Examples 67 to 71, wherein the set of the plurality of features includes a subset of features corresponding to a cruise phase of the flight, the subset of features including a maximum specific energy, a travel duration, a maximum altitude, a maximum mach, a maximum calibrated air speed, or some combination thereof.

Example 73 includes the device of any of Examples 67 to 72, wherein the set of the plurality of features includes a subset of features corresponding to a landing phase of the flight, the subset of features including a weight estimation, an approach speed, a mean flap angle, or some combination thereof.

Example 74 includes the device of any of Examples 65 to 73, wherein training the trained model comprises training a plurality of trial models and selecting one of the plurality of trained trial models based on a performance criterion.

Example 75 includes the device of Example 74 and further includes partitioning the training data set into a training data subset and a test data subset, and wherein the performance criterion is based on the test data subset.

Example 76 includes the device of Example 75, wherein the training data subset includes synthetic data and the test data subset includes real data.

## Claims

1. A computer-implemented method comprising:

   receiving input data corresponding to trajectory data of a flight of an aircraft;
   generating a set of input parameters based on the trajectory data, wherein the set of input parameters include a first subset of parameters corresponding to a takeoff phase of the flight and a second subset of parameters corresponding to a climb phase of the flight; and
   processing the set of input parameters using a trained model to generate an estimate of a takeoff weight of the aircraft.

2. The computer-implemented method of claim 1, wherein the set of input parameters further includes a third subset of parameters corresponding to a ground roll phase of the flight, a cruise phase of the flight, or a landing phase of the flight.

3. The computer-implemented method of any one of claims 1 or 2, wherein the input data corresponds to publicly available surveillance data associated with the flight of the aircraft.

4. The computer-implemented method of any one of claims 1 to 3, further comprising adjusting a parameter of a planned flight of the aircraft, the planned flight subsequent to the flight of the aircraft.

5. The computer-implemented method of claim 4, further comprising providing a verification indication of an initial weight of the aircraft prior to the planned flight.

6. The computer-implemented method of any one of claims 1 to 5, further comprising training the trained model with a training data set including a set of quick access recorder ("QAR") data, synthetic data, or a combination thereof.

7. The computer-implemented method of claim 6, further comprising:

   extracting a plurality of features;
   determining a feature importance value for each of the plurality of features; and
   selecting a set of the plurality of features based at least on the feature importance values, wherein the set of input parameters corresponds to the selected set of the plurality of features.

8. The computer-implemented method of claim 7, wherein the set of the plurality of features includes a subset of features corresponding to a ground roll phase of the flight, the subset of features including a maximum ground speed, mean flap angle, weight estimation, ground roll distance, or some combination thereof; and/or

computer-, wherein the set of the plurality of features includes a subset of features corresponding to a takeoff phase of the flight, the subset of features including a mean specific energy of the aircraft, a time span, a maximum acceleration, a maximum specific energy gradient, or some combination thereof; and/or
wherein the set of the plurality of features includes a subset of features corresponding to a climb phase of the flight, the subset of features including a climb thrust, specific energy gradient, one or more rate of climb features, a maximum climb angle, or some combination thereof; and/or
wherein the set of the plurality of features includes a subset of features corresponding to a cruise phase of the flight, the subset of features including a maximum specific energy, a travel duration, a maximum altitude, a maximum mach, a maximum calibrated air speed, or some combination thereof; and/or
wherein the set of the plurality of features includes a subset of features corresponding to a landing phase of the flight, the subset of features including a weight estimation, an approach speed, a mean flap angle, or some combination thereof.

9. The computer-implemented method of claim 6, wherein training the trained model comprises training a plurality of trial models and selecting one of the plurality of trained trial models based on a performance criterion.

10. The computer-implemented method of claim 9, further comprising partitioning the training data set into a training data subset and a test data subset, and wherein the performance criterion is based on the test data subset.

11. The computer-implemented method of claim 10, wherein the training data subset includes synthetic data and the test data subset includes real data.

12. A device comprising one or more processors configured to perform the method of any one of claims 1 to 5.

13. The device of claim 12, wherein the one or more processors are further configured to perform the method of any one of claims 6 to 11.

14. A non-transitory computer-readable medium comprising instructions that, when executed by one or more processors, cause the one or more processors to perform the method of any one of claims 1 to 5.

15. The non-transitory computer-readable medium of claim 14, wherein the instructions, when executed by the one or more processors, further cause the one or more processors to perform the method of any one of claims 6 to 11.

FIG. 1

FIG. 2

**FIG. 3**

FIG. 4

EP 4 564 247 A1

**FIG. 5**

Mean Absolute Error: 1.32 TOW%
Standard Deviation: 1.79 TOW%

FIG. 6

FIG. 7

FIG. 8

900

902
RECEIVE INPUT DATA CORRESPONDING TO TRAJECTORY DATA OF A FLIGHT OF AN AIRCRAFT

904
GENERATE A SET OF INPUT PARAMETERS BASED ON THE TRAJECTORY DATA, WHEREIN THE SET OF INPUT PARAMETERS INCLUDES A FIRST SUBSET OF PARAMETERS CORRESPONDING TO A TAKEOFF PHASE OF THE FLIGHT AND A SECOND SUBSET OF PARAMETERS CORRESPONDING TO A CLIMB PHASE OF THE FLIGHT

906
PROCESS THE SET OF INPUT PARAMETERS USING A TRAINED MODEL TO GENERATE AN ESTIMATE OF A TAKEOFF WEIGHT OF THE AIRCRAFT

908
TRAIN THE TRAINED MODEL WITH A TRAINING DATA SET INCLUDING A SET OF QAR DATA, SYNTHETIC DATA, OR A COMBINATION THEREOF

910
EXTRACT A PLURALITY OF FEATURES

912
DETERMINE A FEATURE IMPORTANCE VALUE FOR EACH OF THE PLURALITY OF FEATURES

914
SELECT A SET OF THE PLURALITY OF FEATURES BASED AT LEAST ON THE FEATURE IMPORTANCE VALUES, WHEREIN THE SET OF INPUT PARAMETERS CORRESPONDS TO THE SELECTED SET OF THE PLURALITY OF FEATURES

**FIG. 9**

1000 ⌐

INPUT/OUTPUT
DEVICE(S) 1070

COMPUTING DEVICE 1010

SYSTEM MEMORY 1030

OPERATING SYSTEM 1032

APPLICATIONS
(E.G., INSTRUCTIONS) 1034

INSTRUCTION(S) 1036

INPUT PARAMETER
GENERATOR 110

INPUT PARAMETER
PROCESSOR 112

INPUT/OUTPUT
INTERFACE(S) 1040

PROGRAM DATA 1038

INPUT PARAMETER(S)
118

TRAINED MODEL 124

ESTIMATE OF A
TAKEOFF WEIGHT 138

PROCESSOR(S)
1020

STORAGE
DEVICE(S) 1050

COMMUNICATIONS
INTERFACE(S) 1060

DEVICE(S) OR
CONTROLLER(S) 1080

**FIG. 10**

Europäisches Patentamt

European Patent Office

Office européen des brevets

**EUROPEAN SEARCH REPORT**

**Application Number**

EP 23 38 3242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINYU HE ET AL: "Data-driven Method for Estimating Aircraft Mass from Quick Access Recorder using Aircraft Dynamics and Multilayer Perceptron Neural Network", ARXIV.ORG, CORNELL UNIVERSITY LIBRARY, 201 OLIN LIBRARY CORNELL UNIVERSITY ITHACA, NY 14853, 10 December 2020 (2020-12-10), XP081835356, * Sections 1 - 3 * * figure 1 * | 1-15 | INV. G06Q10/04 G01G19/07 |
| X | SUN JUNZI ET AL: "Aircraft initial mass estimation using Bayesian inference method", TRANSPORTATION RESEARCH PART C:EMERGING TECHNOLOGIES, vol. 90, 1 May 2018 (2018-05-01), pages 59-73, XP093105556, GB ISSN: 0968-090X, DOI: 10.1016/j.trc.2018.02.022 * Sections 2-3 * * figure 1 * | 1-15 | |
| X | Chati Yashovardhan Sushil ET AL: "Statistical modeling of aircraft takeoff weight", , 1 June 2017 (2017-06-01), XP093125568, Retrieved from the Internet: URL:https://web.mit.edu/hamsa/www/pubs/ChatiBalakrishnanATM2017.pdf [retrieved on 2024-01-30] * Sections III-V * | 1-15 | |

-----

-----

-/--

| | | |
|---|---|---|
| | | TECHNICAL FIELDS SEARCHED (IPC) |
| | | G06Q G01G |

The present search report has been drawn up for all claims

| Place of search | Date of completion of the search | Examiner |
|---|---|---|
| Munich | 31 January 2024 | Shivaldova, Veronika |

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALLIGIER RICHARD ET AL: "Machine Learning and Mass Estimation Methods for Ground-Based Aircraft Climb Prediction", IEEE TRANSACTIONS ON INTELLIGENT TRANSPORTATION SYSTEMS, IEEE, PISCATAWAY, NJ, USA, vol. 16, no. 6, 1 December 2015 (2015-12-01), pages 3138-3149, XP011592360, ISSN: 1524-9050, DOI: 10.1109/TITS.2015.2437452 [retrieved on 2015-11-24] * Subsection II-C * * Subsection V-D * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 31 January 2024 | Shivaldova, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)